# EUROPEAN PATENT SPECIFICATION

(11) **EP 4 528 898 B1**
(45) Date of publication and mention of the grant of the patent: **18.11.2026**
(21) Application number: 23824205.1
(22) Date of filing: 13.06.2023
(51) Int. Cl.: H01M 50/24, H01M 50/507, H01M 50/211, H01M 50/59, H01M 50/358, H01M 50/289, H01M 10/658, H01M 10/647, H01M 50/291, H01M 50/51, H01M 50/548

(54) **BATTERY MODULE AND MANUFACTURING METHOD THEREOF**
BATTERIEMODUL UND VERFAHREN ZUR HERSTELLUNG DES BATTERIEMODULS
MODULE DE BATTERIE ET PROCÉDÉ DE FABRICATION D'UN MODULE DE BATTERIE

(30) Priority: 14.06.2022 KR 20220072093
(43) Date of publication of application: 26.03.2025
(73) Proprietor: LG Energy Solution, Ltd., Seoul 07335 (KR)
(72) Inventor: LEE, Taekyeong, Daejeon 34122 (KR); JUNG, Byeongyoon, Daejeon 34122 (KR); LEE, Sun Jung, Daejeon 34122 (KR); KIM, Donghyun, Daejeon 34122 (KR)
(74) Representative: Plasseraud IP
(86) International application number: PCT/KR2023/008114
(87) International publication number: WO 2023/243989

(56) References cited:
- EP-A1- 3 958 379
- FR-A3- 2 988 915
- KR-A- 20180 074 133
- KR-A- 20210 004 189
- KR-A- 20220 001 228
- KR-A- 20220 075 710
- KR-B1- 102 380 225
- US-A1- 2018 183 119

## Description

### [TECHNICAL FIELD]

This application claims the benefit of priority based on Korean Patent Application No. 10-2022-0072093, dated June 14, 2022.

The present invention relates to a battery module and a manufacturing method of a battery module, and more particularly, to a battery module and a manufacturing method of a battery module in which heat transfer between battery cells is delayed or prevented and manufacturing costs are reduced.

### [BACKGROUND ART]

A secondary battery refers to a battery that may be charged and discharged, unlike primary batteries that cannot be recharged. These secondary batteries are used in small, high-tech electronic devices such as mobile phones, PDAs and laptop computers as well as in energy storage systems (ESS), electric vehicles (EV) or hybrid electric vehicles (HEV) as a power source.

A battery module refers to a device in which a plurality of secondary batteries (referred to as "battery cells" hereinafter) is connected in series or parallel. When a problem such as a short circuit occurs in some of the battery cells in the battery module and the temperature of the battery cell exceeds the critical temperature, a thermal runaway phenomenon may occur.

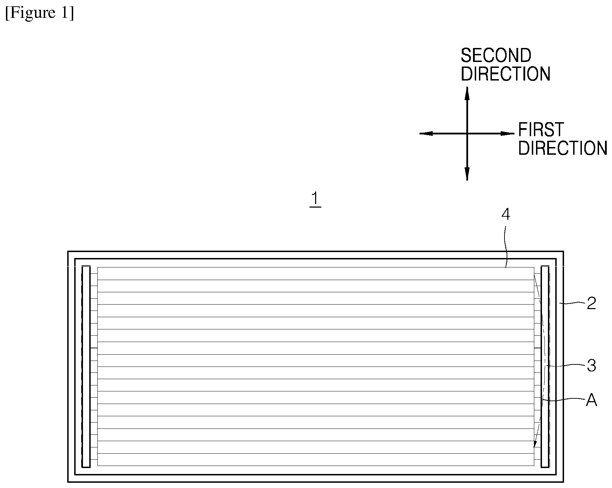

Heat and flame generated by the thermal runaway phenomenon of some battery cells in the battery module elevate the temperature of other battery cells, which can cause the thermal runaway phenomenon to spread to other battery cells. When the thermal runaway phenomenon rapidly spreads to other battery cells, the possibility of ignition or explosion of the battery module increases. Therefore, it is necessary to delay heat transfer between battery cells. In this regard, description will be given with reference to FIG. 1.

FIG. 1 is a plan view illustrating a conventional battery module.

Referring to FIG. 1, a conventional battery module 1 may include a housing 2, a busbar 3 and a battery cell 4. A plurality of battery cells 4 may be electrically connected to the busbar 3.

For example, when a thermal runaway phenomenon occurs in the battery cell 4 shown at the upper end of the drawing (one end of the second direction), heat, flame, etc. may be transferred/propagated, thereby propagating the thermal runaway phenomenon to the battery cell 4 adjacent to the battery cell 4 shown at the upper end of the drawing. Moreover, for example, heat, flame, etc. may be transferred/propagated through the busbar 3 or the space where the busbar 3 is installed, as shown by the dashed-dotted arrow A such that the thermal runaway phenomenon is propagated even to the battery cell that is not adjacent to the battery cell 4 shown at the upper end of the drawing.

Here, when the plurality of battery cells 4 in FIG. 1 are connected in series, the thermal runaway phenomenon can spread more rapidly to non-adjacent battery cells 4, and the possibility of the battery module igniting or exploding increases. In case the plurality of battery cells 4 connected in series, a pair of battery cells 4 that are not adjacent to each other have a larger potential difference than a pair of adjacent battery cells 4 such that the possibility of the problem of short circuit in the battery cell 4 increases due to the thermal runaway phenomenon spreading more rapidly to non-adjacent battery cells 4 having a large potential difference.

Therefore, in order to reduce the possibility of ignition or explosion of the battery module, not only the heat transfer between adjacent battery cells 4 but also the heat transfer between non-adjacent battery cells 4 must be delayed. Prior art related to delaying heat transfer between battery cells is as follows.

Korean Patent Application Publication No. 10-2022-0014117 discloses a battery module that includes an endothermic firewall capable of controlling the heat transfer phenomenon caused by a battery fire, wherein an endothermic firewall is interposed between a plurality of secondary battery cells accommodated in the battery module.

However, the prior art does not provide a method to delay heat transfer between non-adjacent battery cells 4.

Document US2018/183119 A1 discloses a battery module according to the preamble portion of the claim 1.

### [PRIOR ART DOCUMENT]

### [PATENT DOCUMENT]

(Patent Document 0001) Korean Patent Application Publication No. 10-2022-0014117

### [DISCLOSURE]

### [TECHNICAL PROBLEM]

In order to solve the above-described problems, it is an object of the present invention to provide a battery module in which heat transfer between battery cells is delayed or prevented.

It is an object of the present invention to provide a battery module capable of reducing the possibility of ignition or explosion of the battery module 10.

It is an object of the present invention to provide a battery module that delays or prevents heat transfer between battery cells while connecting the battery cells to one another electrically.

It is an object of the present invention to provide a battery module that is lightweight, reduces manufacturing and maintenance costs, and shortens manufacturing time.

Objects of the present invention are not limited to the above-described objects, and other objects and advantages of the present invention will be understood by the following description and will be more definitely understood through the embodiments of the present invention. It is also to be easily understood that the objectives and advantages of the present invention may be realized and attained by means and a combination thereof described in the appended claims.

### [TECHNICAL SOLUTION]

In order to solve the above-described problems, the present invention provides a battery module including a housing 100, a plurality of busbars 200, a plurality of battery cells 300 and one or more barriers 400.

The housing 100 is provided with a hollow space S therein.

The plurality of busbars 200 is installed at one end portion and the other end portion in a first direction of the hollow space S.

The plurality of battery cells 300 are arranged in the hollow space S side by side in a second direction that intersects the first direction and upward and downward directions.

Each of the plurality of battery cells 300 includes a body 310 and a pair of electrodes 320 and 330.

The body 310 is disposed at a center portion in the first direction of the hollow space S.

The pair of electrodes 320 and 330 protrudes from the body 310 toward one side and the other side of the first direction.

The pair of electrodes 320 and 330 is in contact with the plurality of busbars 200.

The one or more barriers 400 extends in the first direction and the upward and downward directions.

The one or more barriers 400 is installed between the body 310 of a pair of the battery cells 300 arranged adjacent to each other in the second direction to partition, in the second direction, the center portion in the first direction of the hollow space S.

The one or more barriers 400 extends in the first direction to one end portion or other end portion in the first direction of the housing 100 to partition, in the second direction, the one end portion or the other end portion in the first direction of the hollow space S.

A pair of the plurality of busbars 200 which are installed at one side and other side in the second direction of each of the one or more barriers 400 with the each of the one or more barriers 400 therebetween may be physically separated in the second direction by the one or more barriers 400.

In one embodiment, the housing 100 may include a base 110 and a first sidewall 120 or a second sidewall 130.

The base 110 may be extended in the first direction and the second direction.

The first sidewall 120 may extend from one end portion in the first direction of the base 110 in the upward direction.

The second sidewall 130 may extend from the other end portion in the first direction of the base 110 in the upward direction.

Each of the one or more barriers 400 may extend to the one side or the other side of the first direction to be in contact with the first sidewall 120 or the second sidewall 130 and accordingly partitions, in the second direction, the one end portion or the other end portion in the first direction of the hollow space S.

In one embodiment, the one or more barriers 400 may include a first barrier 400a or a second barrier 400b.

The first barrier 400a may extend to one side of the first direction and is in contact with the first sidewall 120, thereby partitioning, in the second direction, the one end portion in the first direction of the hollow space S.

The first barrier 400a may be at least partially separated from the second sidewall 130.

The second barrier 400b may extend to the other side of the first direction and is in contact with the second sidewall 130, thereby partitioning, in the second direction, the other end portion in the first direction of the hollow space S.

The second barrier 400b may be at least partially separated from the first sidewall 120.

The plurality of busbars 200 may include one side busbar 200a and the other side busbar 200b.

The one side busbar 200a and the other side busbar 200b may be installed: at one side and other side of the second direction of one side in the first direction of the first barrier 400a, respectively, adjacent to the first barrier 400a with the first barrier 400a therebetween while physically separated from each other; or at the one side and the other side of the second direction of other side in the first direction of the second barrier 400b, respectively, adjacent to the second barrier 400b with the second barrier 400b therebetween while physically separated from each other.

The plurality of battery cells 300 may include one side battery cell 300a and the other side battery cell 300b.

The one side battery cell 300a and the other side battery cell 300b may be disposed: at one side and other side in the second direction of the first barrier 400a, respectively, adjacent to the first barrier 400a; or at one side and other side in the second direction of the second barrier 400b, respectively, adjacent to the second barrier 400b.

The pair of electrodes 320 and 330 of the one side battery cell 300a may be in contact with: the one side busbar 200a; and one of the plurality of busbars 200 installed between the first barrier 400a and the second sidewall 130 or installed between the second barrier 400b and the first sidewall 120.

The pair of electrodes 320 and 330 of the other side battery cell 300b may be in contact with: the other side busbar 200b; and one of the plurality of busbars 200 installed between the first barrier 400a and the second sidewall 130 or installed between the second barrier 400b and the first sidewall 120.

Accordingly, the one side battery cell 300a and the other side battery cell 300b may be connected in series.

In one embodiment, a plurality of the barriers 400 may be provided.

The plurality of barriers 400 may include one or more first barriers 400a and one or more second barriers 400b.

The one or more first barriers 400a may extend to the one end portion in the first direction of the housing 100 to partition, in the second direction, the one end portion in the first direction of the hollow space S.

The one or more second barriers 400b may extend to the other end portion in the first direction of the housing 100 to partition the other end portion in the first direction of the hollow space S in the second direction.

The one or more first barriers 400a and the one or more second barriers 400b may be alternately arranged along the second direction.

The busbar 200 installed at each of one side and other side of the second direction of one side in the first direction of the one or more first barriers 400a may be physically separated from each other with the one or more first barriers 400a therebetween.

The busbar 200 installed at each of one side and other side of the second direction of other side in the first direction of the one or more second barriers 400b may be physically separated from each other with the one or more second barriers 400b therebetween.

In one embodiment, a plurality of the barriers 400 may be provided.

The plurality of barriers 400 may include one or more first barriers 400a and one or more second barriers 400b.

The one or more first barriers 400a may extend to the one end portion in the first direction of the housing 100 to partition, in the second direction, the one end portion in the first direction of the hollow space S.

The one or more second barriers 400b may extend to the other end portion in the first direction of the housing 100 to partition the other end portion in the first direction of the hollow space S in the second direction.

The one or more first barriers 400a may not partition, in the second direction, the other end portion in the first direction of the hollow space S.

The one or more second barriers 400b may not partition, in the second direction, the one end portion in the first direction of the hollow space S.

The one or more first barriers 400a and the one or more second barriers 400b are alternately arranged along the second direction.

In one embodiment, at least a portion of the plurality of busbars 200 may be installed at other side in the first direction of the one or more first barriers 400a or at one side in the first direction of the one or more second barriers 400b.

In one embodiment, the housing 100 may include a cover 160 covering an upper portion of the hollow space S.

The cover 160 may be provided with one or more exhaust holes 162.

The one or more exhaust holes 162 may penetrate the cover 160.

The one or more exhaust holes 162 may exhaust flame, heat or gas generated from the battery cell 300 installed in the hollow space S to an outside of the housing 100.

In one embodiment, a plurality of the barriers 400 may be provided.

The plurality of barriers 400 may include one or more first barriers 400a and one or more second barriers 400b.

The one or more first barriers 400a may extend to the one end portion in the first direction of the housing 100 to partition, in the second direction, the one end portion in the first direction of the hollow space S.

The one or more second barriers 400b may extend to the other end portion in the first direction of the housing 100 to partition the other end portion in the first direction of the hollow space S in the second direction.

The one or more first barriers 400a may not partition, in the second direction, the other end portion in the first direction of the hollow space S.

The one or more second barriers 400b may not partition, in the second direction, the one end portion in the first direction of the hollow space S.

The one or more first barriers 400a and the one or more second barriers 400b are alternately arranged along the second direction.

The one or more exhaust holes 162 are provided at an upper portion of other side of the first direction of the one or more first barriers 400a or an upper portion of one side of the first direction of the one or more second barriers 400b.

In addition, in order to solve the above-described problem, the present invention provides a manufacturing method of a battery module S500 including a housing manufacturing step S510 for manufacturing the housing 100.

In the housing manufacturing step S510, at least a portion of the housing 100 and at least a portion of the one or more barriers 400 may be integrally extruded.

In one embodiment, the housing 100 may include a base 110, a third sidewall 140, and a fourth sidewall 150.

The base 110 may be extended in the first direction and the second direction.

The third sidewall 140 may extend from one end portion in the second direction of the base 110 in the upward direction.

The fourth sidewall 150 may extend from the other end portion in the second direction of the base 110 in the upward direction.

The at least a portion of the one or more barriers 400 may be coupled to at least a portion of the upper surface of the base 110.

In the housing manufacturing step S510, at least a portion of the base 110, at least a portion of the third sidewall 140 and at least a portion of the fourth sidewall 150, and the at least a portion of the one or more barriers 400 may be integrally extruded.

### [ADVANTAGEOUS EFFECTS]

According to embodiments of the present invention, the battery module 10 may include: a housing 100 having a hollow space S therein; a plurality of busbars 200 installed at one end portion and other end portion in a first direction of the hollow space S; a plurality of battery cells 300 disposed in the hollow space S along a second direction intersecting the first direction and upward and downward directions, wherein each of the plurality of battery cells 300 comprises: a body 310 disposed at a center portion in the first direction of the hollow space S; and a pair of electrodes 320 and 330 in contact with the plurality of busbars 200 and protruding from the body 310 toward one side and other side of the first direction; and one or more barriers 400 extending in the first direction and the upward and downward directions, wherein each of one or more barriers 400 is: disposed between the body 310 of a pair of battery cells 300 adjacent to each other in the second direction to partition, in the second direction, the center portion in the first direction of the hollow space S; and extending to one end portion or other end portion in the first direction of the housing 100 to partition, in the second direction, the one end portion or the other end portion in the first direction of the hollow space S. As a result, heat transfer between the center portion in the first direction inside the housing 100 and the battery cell 300 at one end portion or the other end portion of the housing 100 may be delayed or prevented.

Accordingly, even when a problem such as a short circuit occurs in some battery cells 300 resulting in a thermal runaway phenomenon, rapid spread of the thermal runaway phenomenon to other battery cells 300 is prevented, thereby reducing the possibility of ignition or explosion of the battery module 10.

In particular, one end portion or the other end portion in the first direction of the inside the housing 100, in which heat transfer between the battery cells 300 is inevitable due to the busbar 200 connecting the plurality of battery cells 300, is partitioned by the barrier 400. Thus, the heat transfer between battery cells 300 may be effectively delayed or prevented.

In addition, since it is partitioned by the barrier 400, rapid heat transfer between the non-adjacent battery cells 300 in the second direction having a large electric potential difference therebetween occurring at the one end portion or the other end portion in the first direction of the inside the housing 100 may be prevented. Therefore, the possibility of ignition or explosion of the battery module 10 may be reduced.

According to embodiments of the present invention, the housing 100 may include: a base 110 extending in the first direction and the second direction; and a first sidewall 120 extending in the upward direction from one end portion in the first direction of the base 110 or a second sidewall 130 extending in the upward direction from other end portion in the first direction of the base 110. Each of the one or more barriers 400 may extend to the one side or the other side of the first direction to be in contact with the first sidewall 120 or the second sidewall 130 and accordingly partitions, in the second direction, the one end portion or the other end portion in the first direction of the hollow space S.

Accordingly, the housing 100 and the barrier 400 may be easily constructed with a simple configuration and at low cost.

According to embodiments of the present invention, the one or more barriers 400 may include: a first barrier 400a extending toward the one side of the first direction to be in contact with the first sidewall 120, partitioning, in the second direction, one end portion in the first direction of the hollow space S, and at least partially spaced apart from the second sidewall 130; or a second barrier 400b extending toward the other side of the first direction to be in contact with the second sidewall 130, partitioning, in the second direction, the other end portion in the first direction of the hollow space S, and at least partially spaced apart from the first sidewall 120. The plurality of busbars 200 may include one side busbar 200a and other side busbar 200b. The one side busbar 200a and the other side busbar 200b may be installed: at one side and other side of the second direction of one side in the first direction of the first barrier 400a, respectively, adjacent to the first barrier 400a with the first barrier 400a therebetween while physically separated from each other; or at the one side and the other side of the second direction of other side in the first direction of the second barrier 400b, respectively, adjacent to the second barrier 400b with the second barrier 400b therebetween while physically separated from each other. The plurality of battery cells 300 may include one side battery cell 300a and other side battery cell 300b. The one side battery cell 300a and the other side battery cell 300b are disposed: at one side and other side in the second direction of the first barrier 400a, respectively, adjacent to the first barrier 400a; or at one side and other side in the second direction of the second barrier 400b, respectively, adjacent to the second barrier 400b. A pair of electrodes 320 and 330 of the one side battery cell 300a may be in contact with: the one side busbar 200a; and one of the plurality of busbars 200 installed between the first barrier 400a and the second sidewall 130 or installed between the second barrier 400b and the first sidewall 120. A pair of electrodes 320 and 330 of the other side battery cell 300b are in contact with: the other side busbar 200b; and one of the plurality of busbars 200 installed between the first barrier 400a and the second sidewall 130 or installed between the second barrier 400b and the first sidewall 120. Thus, the one side battery cell 300a and the other side battery cell 300b may be connected in series.

Accordingly, since the one side busbar 200a and the other side busbar 200b are physically separated from each other with the first barrier 400a or second barrier 400b therebetween, the one end portion or the other end portion in the first direction of the inside the housing 100 is clearly partitioned by the first barrier 400a or second barrier 400b. Therefore, heat transfer between battery cells 300 may be effectively delayed or prevented.

In addition, the electrode 330 or 320 at the other side in the first direction of the one side battery cell 300a and the other side battery cell 300b may be electrically connected to each other (in series) even when the electrode 330 or 320 at the one side in the first direction of the one side battery cell 300a and the other side battery cell 300b are not connected to each other due to the physical separation between the one side busbar 200a and the other side busbar 200b. That is, the one end portion or the other end portion in the first direction of the inside the housing 100 is clearly partitioned by the first barrier 400a or the second barrier 400b while electrically connecting the one side battery cell 300a and the other side battery cell 300b.

According to embodiments of the present invention, a plurality of barriers 400 may be provided. The plurality of barriers 400 may include: one or more first barriers 400a extending to the one end portion in the first direction of the housing 100 to partition, in the second direction, the one end portion in the first direction of the hollow space S; and one or more second barriers 400b extending to the other end portion in the first direction of the housing 100 to partition the other end portion in the first direction of the hollow space S in the second direction. The one or more first barriers 400a and the one or more second barriers 400b are alternately arranged along the second direction. The busbar 200 installed at each of one side and other side of the second direction of one side in the first direction of the one or more first barriers 400a may be physically separated from each other with the one or more first barriers 400a therebetween. The busbar 200 installed at each of one side and other side of the second direction of other side in the first direction of the one or more second barriers 400b is physically separated from each other with the one or more second barriers 400b therebetween.

Accordingly, since the busbars 200 are physically separated from each other with the first barrier 400a and the second barrier 400b therebetween, the one end portion and the other end portion in the first direction of the inside the housing 100 are clearly partitioned by the first barrier 400a and second barrier 400b. Therefore, heat transfer between battery cells 300 may be effectively delayed or prevented.

In addition, the electrodes at the other side may be electrically connected to each other (in series) through the busbar 200c installed at the other side in the first direction of the first barrier 400a or through the busbar 200c installed at one side in the first direction of the second barrier 400b even when one electrode at the one side in the first direction of the battery cells 300 disposed at one side and the other side in the second direction of the first barrier 400a and the second barrier 400b are not connected to each other due to the physical separation between the busbars 200 with the first barrier 400a and the second barrier 400b therebetween. That is, the one end portion and the other end portion in the first direction of the inside the housing 100 are clearly partitioned by the first barrier 400a and the second barrier 400b while electrically connecting the battery cells 300.

According to embodiments of the present invention, a plurality of barriers 400 may be provided. The plurality of barriers 400 may include: one or more first barriers 400a extending to the one end portion in the first direction of the housing 100 to partition, in the second direction, the one end portion in the first direction of the hollow space S; and one or more second barriers 400b extending to the other end portion in the first direction of the housing 100 to partition the other end portion in the first direction of the hollow space S in the second direction. The one or more first barriers 400a may not partition, in the second direction, the other end portion in the first direction of the hollow space S. The one or more second barriers 400b do not partition, in the second direction, the one end portion in the first direction of the hollow space S. The one or more first barriers 400a and the one or more second barriers 400b are alternately arranged along the second direction.

Accordingly, the flame, heat or gas generated from the battery cell 300 may transfer/propagate/spread through the one end portion or the other end portion in the first direction of the housing 100 that is not partitioned by the first barrier 400a and the second barrier 400b in the second direction. Therefore, the possibility of ignition or explosion of the battery module 10 may be reduced.

In addition, since flame, heat or gas generated from the battery cell 300 is able to reach the other battery cell 300 only by repeatedly traveling back and forth between two end portions of the housing 100 in the first direction, the transfer of flame, heat or gas between battery cells 300 may be delayed. Therefore, the possibility of ignition or explosion of the battery module 10 may be reduced.

In addition, since the flame or heat generated from the battery cell 300 sequentially propagates in the second direction to the adjacent battery cells 300 having a small potential difference, the possibility of ignition or explosion of the battery module 10 is reduced, and even when ignition or explosion occurs, damage may be reduced.

Additionally, since the lengths in the first direction of the first barrier 400a and the second barrier 400b are reduced, the battery module 10 may be lightweight.

Additionally, a hollow space may be provided in which the busbar 200 may be installed at the other side in the first direction of the first barrier 400a and at one side in the first direction of the second barrier 400b. Therefore, in order to perform insert installation or penetration installation of the busbar 200 at the other side in the first direction of the first barrier 400a and at one side in the first direction of the second barrier 400b, it is not necessary to process the first barrier 400a and the second barrier 400b. Thus, the manufacturing cost of the battery module 10 may be reduced and the manufacturing time may be shortened.

According to embodiments of the present invention, at least a portion of the plurality of busbars 200 may be installed at the other side in the first direction of the first barrier 400a or at one side in the first direction of the second barrier 400b.

Accordingly, since the busbar 200 may be easily installed and replaced, the manufacturing and maintenance costs of the battery module 10 may be reduced.

According to embodiments of the present invention, the housing 100 may include a cover 160 that covers the upper portion of the hollow space S. The cover 160 is provided with one or more exhaust holes 162 penetrating the cover 160 for exhausting flame, heat or gas generated from the battery cell 300 installed in the hollow space S to an outside of the housing 100.

Accordingly, heat may be prevented from being accumulated or concentrated inside the housing 100, the amount of transferred heat may be reduced, and heat transfer may be delayed. Therefore, the possibility of ignition or explosion of the battery module 10 may be reduced.

According to embodiments of the present invention, a plurality of barriers 400 may be provided. The plurality of barriers 400 may include: one or more first barriers 400a extending to the one end portion in the first direction of the housing 100 to partition, in the second direction, the one end portion in the first direction of the hollow space S; and one or more second barriers 400b extending to the other end portion in the first direction of the housing 100 to partition the other end portion in the first direction of the hollow space S in the second direction. The one or more first barriers 400a may not partition, in the second direction, the other end portion in the first direction of the hollow space S. The one or more second barriers 400b may not partition, in the second direction, the one end portion in the first direction of the hollow space S. The one or more first barriers 400a and the one or more second barriers 400b may be alternately arranged along the second direction. The one or more exhaust holes 162 are provided at an upper portion of other side of the first direction of the one or more first barriers 400a or an upper portion of one side of the first direction of the one or more second barriers 400b.

Accordingly, since exhaust holes 162 are provided in areas where the direction of transfer (propagation) of flame, heat or gas rapidly changes, flame, heat or gas is prevented from being accumulated or concentrated, and flame, and heat or gas may be effectively discharged to the outside of the housing 100 even when the number or the size of exhaust holes 162 are small. Therefore, the possibility of ignition or explosion of the battery module 10 may be reduced.

According to embodiments of the present invention, the manufacturing method of a battery module may include a housing manufacturing step S510 of manufacturing a housing 100. In the housing manufacturing step S510, at least a portion of the housing 100 and at least a portion of the one or more barriers 400 may be integrally extruded.

Accordingly, the manufacturing cost of the battery module 10 may be reduced and the manufacturing time may be shortened.

According to embodiments of the present invention, the housing 100 may include: a base 110 extending in first and second directions; a third sidewall 140 extending in an upward direction from one end portion in the second direction of the base 110; and a fourth sidewall 150 extending in the upward direction from other end portion of the base 110. The at least a portion of the one or more barriers 400 may be coupled to at least a portion of an upper surface of the base 110. At least a portion of the base 110, at least a portion of the third sidewall 140 and at least a portion of the fourth sidewall 150, and the at least a portion of the one or more barriers 400 may be integrally extruded in the housing manufacturing step S510.

Accordingly, the manufacturing cost of the battery module 10 may be reduced and the manufacturing time may be shortened.

In addition to the above-described effects, specific effects of the present invention will be described together with the following detailed description for implementing the present invention.

### [DESCRIPTION OF DRAWINGS]

FIG. 1 is a plan view illustrating a conventional battery module.
FIG. 2 is an exploded perspective view schematically illustrating a battery module according to an embodiment of the present invention.
FIG. 3 is a plan view of the battery module of FIG. 2 with the cover removed.
FIG. 4 is a diagram illustrating a state in which the battery cell in FIG. 3 has been removed.
FIG. 5 is a top view of the battery module of FIG. 2.
FIG. 6 is a side cross-sectional view of component C of FIG. 2.
FIG. 7 is a flowchart of a manufacturing method of a battery module according to an embodiment of the present invention.

### [SPECIFIC DETAILS FOR CARRYING OUT THE INVENTION]

The above objects, features and advantages will be described later in detail with reference to the accompanying drawings, and accordingly, those skilled in the art to which the present invention belongs will be able to easily implement the technical idea of the present invention. In describing the present invention, when it is determined that the detailed description of the known technology related to the present invention may unnecessarily obscure the subject matter of the present invention, the detailed description will be omitted. Hereinafter, preferred embodiments according to the present invention will be described in detail with reference to the accompanying drawings. In the drawings, the same reference numerals are used to indicate the same or similar components.

Although "first", "second", and the like may be used to describe various components, these components are not limited by these terms. These terms are only used to distinguish one component from another component, and unless otherwise stated, the first component may be the second component, of course.

Throughout the specification, unless otherwise stated, each component may be singular or plural.

Hereinafter, the arrangement of an arbitrary component on the "upper portion (or lower portion)" or "upper (or lower)" of a component means that an arbitrary component is placed in contact with the upper (or lower) surface of the component. In addition, it may mean that other components may be interposed between the component and any component disposed on (or under) the component.

In addition, when a component is described as "linked", "coupled" or "connected" to another component, the components may be directly connected or connected to each other, but other components may be "interposed" between each component, or each component may be "linked", "coupled" or "connected" through other components.

Singular expressions used herein include plural expressions unless the context clearly dictates otherwise. In this application, terms such as "consisting of" or "comprising" should not be construed as necessarily including all of the various components or steps described in the specification. It should be construed that it may not include some of the components or some of the steps or may further include additional components or steps.

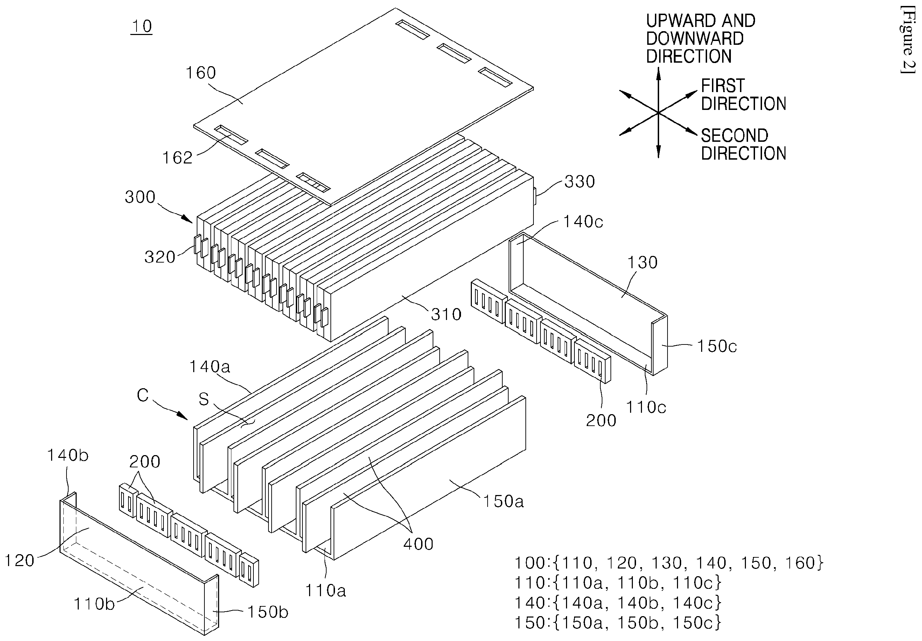

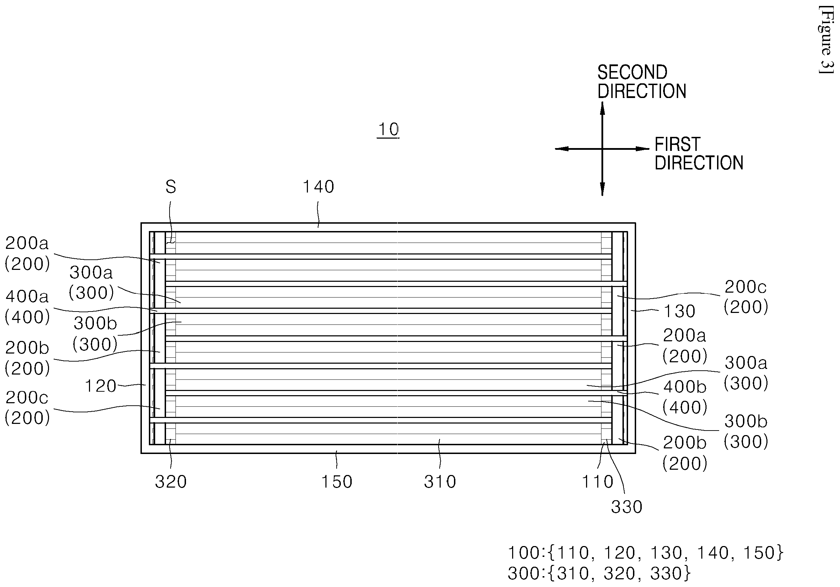

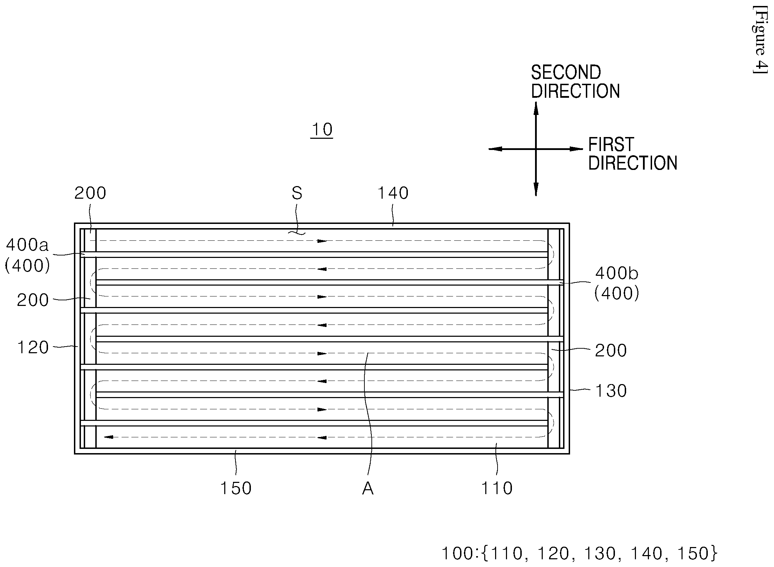

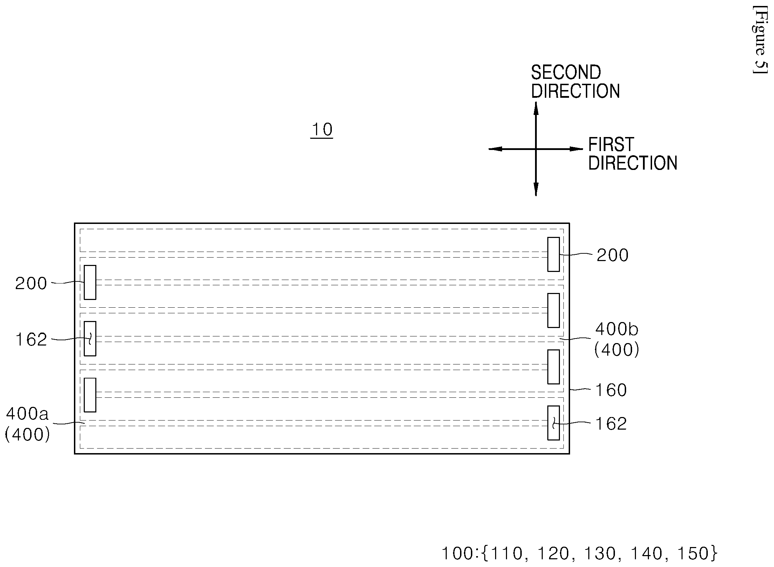

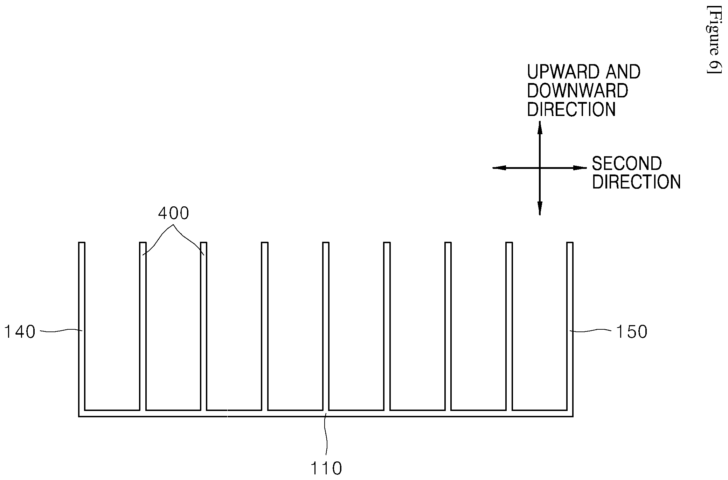

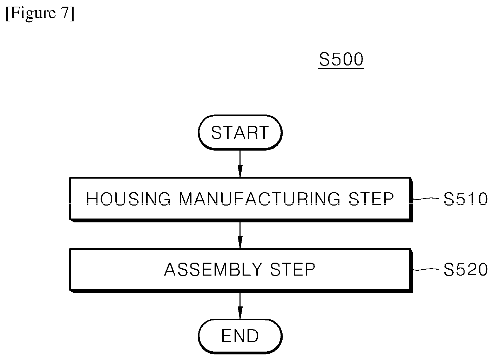

FIG. 2 is an exploded perspective view schematically illustrating a battery module according to an embodiment of the present invention. FIG. 3 is a plan view of the battery module of FIG. 2 with the cover removed. FIG. 4 is a diagram illustrating a state in which the battery cell in FIG. 3 has been removed. FIG. 5 is a top view of the battery module of FIG. 2. FIG. 6 is a side cross-sectional view of component C of FIG. 2. FIG. 7 is a flowchart of a manufacturing method of a battery module according to an embodiment of the present invention.

### [Battery Module]

Referring to FIGS. 2 to 6, the battery module 10 according to one embodiment may include a housing 100, a plurality of busbars 200, a plurality of battery cells 300, and one or more barriers 400. Each element will be described hereinafter.

### [Housing]

The housing 100 may be provided with a hollow space S therein.

The housing 100 may include a base 110 and a first sidewall 120 or a second sidewall 130. Additionally, the housing 100 may include a third sidewall 140 and a fourth sidewall 150. In addition, housing 100 may include a cover 160.

The base 110 may extend in the first direction (e.g., left and right directions) and the second direction (e.g., front and rear directions). The base 110 may have a plate shape.

The first sidewall 120 may extend from one end portion (left side end portion) in the first direction of the base 110 in upward direction. The first sidewall 120 may have a plate shape.

The second sidewall 130 may extend from other end portion (right side end portion) in the first direction of the base 110 in the upward direction. The second sidewall 130 may have a plate shape.

The third sidewall 140 may extend from one end portion in the second direction of the base 110 in the upward direction. The third sidewall 140 may have a plate shape.

The fourth sidewall 150 may extend from the other end portion in the second direction of the base 110 in the upward direction. The fourth sidewall 150 may have a plate shape.

The cover 160 may cover the upper portion of the hollow space S of the housing 100.

One or more exhaust holes 162 may be provided at the cover 160.

The one or more exhaust holes 162 may penetrate the cover 160. The one or more exhaust holes 162 may exhaust flame, heat or gas generated from the battery cell 300 installed in the hollow space S to an outside of the housing 100.

Accordingly, heat may be prevented from being accumulated or concentrated inside the housing 100, the amount of transferred heat may be reduced, and heat transfer may be delayed. Therefore, the possibility of ignition or explosion of the battery module 10 may be reduced.

### [Busbar]

A plurality of busbars 200 may be provided. The plurality of busbars 200 may be installed at one end portion and the other end portion in the first direction of the hollow space S of the housing 100.

The busbar may be provided with a hole through which the electrodes 320 and 330 of the battery cell 300 pass.

The plurality of busbars 200 may include one side busbar 200a and the other side busbar 200b (FIG. 3). The description thereof will be given later.

### [Battery Cell]

A plurality of battery cells 300 may be provided.

The battery cell 300 may include a body 310 and a pair of electrodes 320 and 330.

The body 310 may be disposed at a center portion in the first direction of the hollow space S. When the battery cell 300 is a pouch-type battery cell, the body 310 may be a portion wrapped with a pouch of a laminate having an electrode and a separator stacked therein.

A pair of electrodes 320 and 330 may protrude from the body 310 toward one side and the other side of the first direction. When the battery cell 300 is a pouch-type battery cell, the pair of electrodes 320 and 330 may be electrode tabs or electrode leads that protrude to the outside of the pouch.

The pair of electrodes 320 and 330 may be in contact with the plurality of busbars 200. For example, the electrodes 320 and 330 may penetrate the hole provided in the busbar 200 and then be bent and fused or welded to the busbar 200. However, it is not limited to this configuration.

The plurality of battery cells 300 may be placed in the hollow space S of the housing 100. The plurality of battery cells 300 may be arranged side by side in the second direction that intersects the first direction and upward and downward directions.

The plurality of battery cells 300 may be connected in series or parallel.

For example, as shown, eight banks of two battery cells 300 connected in parallel may be connected in series. However, it is not limited to this configuration.

In a bank connected in parallel, the electrodes 320 and 330 of the plurality of battery cells 300 may be installed in a manner that the same polarities are aligned in the second direction. Between a pair of banks connected in series, the electrodes 320 and 330 of the battery cell 300 may be installed in a manner that opposite polarities are aligned in the second direction.

The plurality of battery cells 300 may include one side battery cell 300a and the other side battery cell 300b (FIG. 3). The one side battery cell 300a and the other side battery cell 300b may be battery cells 300 that belong to a pair of banks adjacent to each other, are disposed adjacent to each other, and are connected in series. The description thereof will be given later.

### [Barrier]

One or more barriers 400 may be provided. The one or more barriers 400 may be extended in the first direction and upward and downward directions.

The lower end portion of the barrier 400 may be coupled to a portion of the upper surface of the base 110 of the housing 100 (FIGS. 2 and 6). The barrier 400 may be formed integrally with at least a portion of the housing 100 or may be formed separately. The description thereof will be given later.

Additionally, the barrier 400 may be in contact with the first sidewall 120, the second sidewall 130 and the cover 160 of the housing 100.

For example, the barrier 400 may be made of a material with excellent thermal insulation properties including aerogel, mica, superwool and glass fiber. However, it is not limited to these materials. As another example, the barrier 400 may be a heat absorbing sheet made of a material that rapidly absorbs heat through a dehydration reaction.

The barrier 400 is installed between the bodies 310 of a pair of battery cells 300 arranged adjacent to each other in the second direction to partition, in the second direction, the center portion in the first direction of the hollow space S of the housing 100.

In addition, the one or more barriers 400 may extend in the first direction to one end portion or other end portion in the first direction of the housing 100 to partition, in the second direction, the one end portion or the other end portion in the first direction of the hollow space S.

As a result, heat transfer (propagation) between the center portion in the first direction inside the housing 100 and the battery cell 300 at one end portion or the other end portion of the housing 100 may be delayed or prevented.

Accordingly, even when a problem such as a short circuit occurs in some battery cells 300 resulting in a thermal runaway phenomenon, rapid spread of the thermal runaway phenomenon to other battery cells 300 is prevented, thereby reducing the possibility of ignition or explosion of the battery module 10.

In particular, one end portion or the other end portion in the first direction of the inside the housing 100, in which as heat transfer between the battery cells 300 is inevitable due to the busbar 200 connecting the plurality of battery cells 300, is partitioned by the barrier 400. Thus, the heat transfer between battery cells 300 may be effectively delayed or prevented.

In addition, since it is partitioned by the barrier 400, rapid heat transfer between the non-adjacent battery cells 300 in the second direction having a large electric potential difference therebetween occurring at the one end portion or the other end portion in the first direction of the inside the housing 100 may be prevented. Therefore, the possibility of ignition or explosion of the battery module 10 may be reduced. Detail description thereof is as follows.

When a bank is constituted by count of n battery cells 300 (n is a natural number) arranged side by side in the second direction and connected in parallel (two in the drawing), and a plurality of the banks (eight in the drawing) are sequentially connected in series, a pair of non-adjacent battery cells 300 in the second direction have a potential difference that increases as the number of battery cells 300 or banks connected and arranged between the pair of battery cells 300 increases. As the potential difference increases, the possibility of problems such as short circuits occurring in the battery cell 300 increases such that the thermal runaway phenomenon may rapidly spread to the battery cell 300 with a large potential difference resulting in significant increase in the probability of the ignition or explosion of the battery module 10. Therefore, when rapid heat transfer between battery cells 300 is prevented by partitioning one end portion or the other end portion in the first direction of the inside the housing 100 with the barrier 400, the possibility of ignition and explosion may be reduced.

For example, one or more barriers 400 may extend to one side or the other side in the first direction, respectively, and may contact the first sidewall 120 or the second sidewall 130 of the housing 100. Accordingly, one or more barriers 400 may partition, in the second direction, one end portion or the other end portion in the first direction of the hollow space S of the housing 100.

Accordingly, the housing 100 and barrier 400 may be easily constructed with a simple configuration and at low cost.

The one or more barrier 400 may include the first barrier 400a or the second barrier 400b.

The first barrier 400a may extend toward the one side of the first direction to be in contact with the first sidewall 120. Accordingly, the first barrier 400a may partition, in the second direction, one end portion in the first direction of the hollow space S of the housing 100.

The first barrier 400a may be at least partially spaced apart from the second sidewall 130.

The second barrier 400b extends to the other side in the first direction and can contact the second sidewall 130 of the housing 100. Accordingly, the second barrier 400b may partition, in the second direction, the other end portion in the first direction of the hollow space S of the housing 100.

The second barrier 400b may be at least partially spaced apart from the first sidewall 120.

Here, the above-described one side busbar 200a and the other side busbar 200b may be installed: at one side and other side of the second direction of one side in the first direction of the first barrier 400a, respectively, adjacent to the first barrier 400a with the first barrier 400a therebetween while physically separated from each other; or at the one side and the other side of the second direction of other side in the first direction of the second barrier 400b, respectively, adjacent to the second barrier 400b with the second barrier 400b therebetween while physically separated from each other.

In addition, the above-described one side battery cell 300a and the other side battery cell 300b may be disposed: at one side and other side in the second direction of the first barrier 400a, respectively, adjacent to the first barrier 400a; or at one side and other side in the second direction of the second barrier 400b, respectively, adjacent to the second barrier 400b.

The pair of electrodes 320 and 330 of the one side battery cell 300a may be in contact with: the one side busbar 200a; and one of the plurality of busbars 200 installed between the first barrier 400a and the second sidewall 130 or installed between the second barrier 400b and the first sidewall 120.

The pair of electrodes 320 and 330 of the other side battery cell 300b may be in contact with: the other side busbar 200b; and one of the plurality of busbars 200 installed between the first barrier 400a and the second sidewall 130 or installed between the second barrier 400b and the first sidewall 120.

Here, the space between the first barrier 400a and the second sidewall 130 may be defined by a space where the first barrier 400a is at least partially spaced apart from the second sidewall 130. Additionally, the space between the second barrier 400b and the first sidewall 120 may be defined by a space where the second barrier 400b is at least partially spaced apart from the first sidewall 120.

Thus, one side battery cell 300a and the other side battery cell 300b may be connected to each other in series.

Accordingly, since the one side busbar 200a and the other side busbar 200b are physically separated from each other with the first barrier 400a or second barrier 400b therebetween, the one end portion or the other end portion in the first direction of the inside the housing 100 is clearly partitioned by the first barrier 400a or second barrier 400b. Therefore, heat transfer between battery cells 300 may be effectively delayed or prevented.

In addition, the electrode 330 or 320 at the other side in the first direction of the one side battery cell 300a and the other side battery cell 300b may be electrically connected to each other (in series) even when the electrode 330 or 320 at the one side in the first direction of the one side battery cell 300a and the other side battery cell 300b are not connected to each other due to the physical separation between the one side busbar 200a and the other side busbar 200b. That is, the one end portion or the other end portion in the first direction of the inside the housing 100 is clearly partitioned by the first barrier 400a or the second barrier 400b while electrically connecting the one side battery cell 300a and the other side battery cell 300b.

Meanwhile, in contrast to the drawing, the one side busbar 200a and the other side busbar 200b may not be physically separated. For example, the one side busbar 200a and the other side busbar 200b may be connected to each other while penetrating the first barrier 400a or the second barrier 400b.

A plurality of barriers 400 may be provided.

The plurality of barriers 400 may include one or more first barriers 400a and one or more second barriers 400b.

The one or more first barriers 400a may extend to the one end portion in the first direction of the housing 100 such that one end portion in the first direction of the hollow space S of housing 100 is partitioned in the second direction.

The one or more second barriers 400b may extend to the other end portion in the first direction of the housing 100 such that the other end portion in the first direction of the hollow space S of housing 100 is partitioned in the second direction.

The first barrier 400a and the second barrier 400b may be alternately arranged along the second direction.

The busbars 200 installed at one side and the other side in first direction of one side in the second direction of the first barrier 400a, respectively, may be physically separated from each other with the first barrier 400a therebetween. For example, as described above, the one side busbars 200a and the other side busbar 200b installed adjacent to the first barrier 400a at one side and the other side in first direction of the one side in the second direction of the first barrier 400a, respectively, may be physically separated from each other with the first barrier 400a therebetween.

The busbars 200 installed at one side and the other side in first direction of the other side in the second direction of the second barrier 400b, respectively, may be physically separated from each other with the second barrier 400b therebetween. For example, as described above, the one side busbars 200a and the other side busbar 200b installed adjacent to the second barrier 400b at one side and the other side in first direction of the other side in the second direction of the second barrier 400b, respectively, may be physically separated from each other with the second barrier 400b therebetween.

Accordingly, since the busbars 200 are physically separated from each other with the first barrier 400a and the second barrier 400b there between, the one end portion and the other end portion in the first direction of the inside the housing 100 are clearly partitioned by the first barrier 400a and second barrier 400b. Therefore, heat transfer between battery cells 300 may be effectively delayed or prevented.

In addition, the electrodes at the other side may be electrically connected to each other (in series) through the busbar 200c installed at the other side in the first direction of the first barrier 400a or through the busbar 200c installed at one side in the first direction of the second barrier 400b even when one electrode at the one side in the first direction of the battery cells 300 disposed at one side and the other side in the second direction of the first barrier 400a and the second barrier 400b are not connected to each other due to the physical separation between the busbars 200 with the first barrier 400a and the second barrier 400b therebetween. That is, the one end portion and the other end portion in the first direction of the inside the housing 100 is clearly partitioned by the first barrier 400a and the second barrier 400b while electrically connecting the battery cells 300.

Meanwhile, in contrast to the drawing, the busbars 200 may not be physically separated from each other with the first barrier 400a or the second barrier 400b therebetween. For example, the busbars 200 may be connected to each other while penetrating the first barrier 400a or the second barrier 400b.

The one or more first barriers 400a may not partition, in the second direction, the other end portion in the first direction of the hollow space S of the housing 100. In addition, the one or more second barriers 400b may not partition, in the second direction, the one end portion in the first direction of the hollow space S of the housing 100.

Therefore, for example, when a flame, heat or gas is generated in the battery cell 300 placed at one side of the second direction, the flame, heat or gas may reach other battery cells 300 by repeatedly traveling back and forth between two end portions of the housing 100 in the first direction as indicated by dotted arrow A of FIG. 4.

Accordingly, the flame, heat or gas generated from the battery cell 300 may transfer/propagate/spread through the one end portion or the other end portion in the first direction of the housing 100 that is not partitioned by the first barrier 400a and the second barrier 400b in the second direction. Therefore, the possibility of ignition or explosion of the battery module 10 may be reduced.

In addition, since flame, heat or gas generated from the battery cell 300 is able to reach the other battery cell 300 only by repeatedly traveling back and forth between two end portions of the housing 100 in the first direction, the transfer of flame, heat or gas between battery cells 300 may be delayed. Therefore, the possibility of ignition or explosion of the battery module 10 may be reduced.

In addition, since the flame or heat generated from the battery cell 300 sequentially propagates in the second direction to the adjacent battery cells 300 having a small potential difference, the possibility of ignition or explosion of the battery module 10 is reduced, and even when ignition or explosion occurs, damage may be reduced.

Additionally, since the lengths in the first direction of the first barrier 400a and the second barrier 400b are reduced, the battery module 10 may be lightweight.

Additionally, a hollow space may be provided in which the busbar 200 may be installed at the other side in the first direction of the first barrier 400a and at one side in the first direction of the second barrier 400b. Therefore, in order to perform insert installation or penetration installation of the busbar 200 at the other side in the first direction of the first barrier 400a and at one side in the first direction of the second barrier 400b, it is nor necessary to process the first barrier 400a and the second barrier 400b. Thus, the manufacturing cost of the battery module 10 may be reduced and the manufacturing time may be shortened.

Here, at least a portion of the plurality of busbars 200 may be installed at the other side in the first direction of the first barrier 400a or at one side in the first direction of the second barrier 400b.

Accordingly, since the busbar 200 may be easily installed and replaced, the manufacturing and maintenance costs of the battery module 10 may be reduced.

In addition, the one or more exhaust holes 162 may be provided at an upper portion of other side of the first direction of the one or more first barriers 400a or an upper portion of one side of the first direction of the one or more second barriers 400b (FIG. 5). Here, the other side in the first direction of the first barrier 400a and one side in the first direction of the second barrier 400b are where transfer (propagation) direction of flame, heat or gas changes rapidly as indicated by the dotted arrow A in FIG. 4.

Accordingly, since exhaust holes 162 are provided in areas where the direction of transfer (propagation) of flame, heat or gas rapidly changes, flame, heat or gas is prevented from being accumulated or concentrated, and flame, and heat or gas may be effectively discharged to the outside of the housing 100 even when the number or the size of exhaust holes 162 are small. Therefore, the possibility of ignition or explosion of the battery module 10 may be reduced.

Meanwhile, in contrast to the drawings, the first barriers 400a may extend in the first direction to the other end portion in the first direction of the housing 100 to partition, in the second direction, the other end portion in the first direction of the hollow space S. Here, the busbar 200 may be installed to penetrate the other side in the first direction of the first barrier 400a.

In addition, in contrast to the drawings, the second barrier 400b may extend in the first direction to the one end portion in the first direction of the housing 100 to partition, in the second direction, the one end portion in the first direction of the hollow space S. Here, the busbar 200 may be installed to penetrate the one side in the first direction of the first barrier 400a.

### [Manufacturing Method of Battery Module]

Referring to FIG. 7, the manufacturing method of a battery module S500 according to one embodiment may include a housing manufacturing step S510 and an assembly step S520.

In the housing manufacturing step S510, the housing 100 may be manufactured. The housing 100 may be extruded rather than formed using a press processing method.

Here, at least a portion of the barriers 400 among the one or more barriers 400 may be extruded integrally with at least a portion of the housing 100.

Accordingly, the manufacturing cost of the battery module 10 may be reduced and the manufacturing time may be shortened.

Specifically, for example, among the housing 100, at least portion 110a of the base 110, a portion 140a of the third sidewall 140 and a portion 150b of the fourth sidewall 150, and at least a portion of the one or more barriers 400 may be extruded integrally (component C of FIG. 2 and FIG. 6).

Accordingly, the manufacturing cost of the battery module 10 may be reduced and the manufacturing time may be shortened.

After integrally extruding at least a portion of the housing 100 and the at least a portion of the one or more barriers 400, both ends may be cut in the first direction such that the plurality of barriers 400 are alternately protrudes toward both sides of the first direction, as component C shown in FIG. 2.

However, it is not limited to this configuration. That is, in the housing manufacturing step S510, the barrier 400 may not be manufactured integrally with at least a portion of the housing 100.

In the assembly step S520, the busbar 200 may be installed inside the housing 100 and the battery cell 300 may be placed. The electrodes 320 and 330 of the battery cell 300 and the busbar 200 may be coupled in advance.

Meanwhile, when the barrier 400 is not manufactured integrally with at least a portion of the housing 100, the barrier 400 manufactured separately from the housing 100 may be attached to the housing 100 before placing the battery cell 300 and installing the busbar 200 in the assembly step S520.

### [DESCRIPTION OF REFERENCE NUMERALS]

| | | | |
|---|---|---|---|
| 10: | battery module | | |
| 100: | housing | | |
| 110: | base | 120: | first sidewall |
| 130: | second sidewall | 140: | third sidewall |
| 150: | fourth sidewall | 160: | cover |
| 162: | exhaust hole | | |
| 200: | busbar | | |
| 300: | battery cell | 310: | body |
| 320, 330: | electrode | | |
| 400: | barrier | | |

## Claims

1. A battery module comprising:
a housing (100) having a hollow space (S) therein;
a plurality of busbars (200) installed at one end portion and other end portion in a first direction of the hollow space (S);
a plurality of battery cells (300) disposed in the hollow space (S) along a second direction intersecting the first direction and upward and downward directions, wherein each of the plurality of battery cells (300) comprises: a body (310) disposed at a center portion in the first direction of the hollow space (S); and a pair of electrodes (320) and (330) in contact with the plurality of busbars (200) and protruding from the body (310) toward one side and other side of the first direction; and
one or more barriers (400) extending in the first direction and the upward and downward directions, wherein each of one or more barriers (400) is disposed between the body (310) of a pair of battery cells (300) adjacent to each other in the second direction to partition, in the second direction, the center portion in the first direction of the hollow space (S);
the battery module being **characterized in that**:
said one or more barriers (400) extends to one end portion or other end portion in the first direction of the housing (100) to partition, in the second direction, the one end portion or the other end portion in the first direction of the hollow space (S), and
a pair of the plurality of busbars (200) installed at one side and other side in the second direction of each of the one or more barriers (400) with the each of the one or more barriers (400) therebetween are physically separated in the second direction by the one or more barriers (400).

2. The battery module of claim 1, wherein the housing (100) comprises: a base (110) extending in the first direction and the second direction; and a first sidewall (120) extending in the upward direction from one end portion in the first direction of the base (110) or a second sidewall (130) extending in the upward direction from other end portion in the first direction of the base (110), and
each of the one or more barriers (400) extends to the one side or the other side of the first direction to be in contact with the first sidewall (120) or the second sidewall (130) and partitions, in the second direction, the one end portion or the other end portion in the first direction of the hollow space (S).

3. The battery module of claim 2, wherein the one or more barriers (400) comprises: a first barrier (400a) extending toward the one side of the first direction to be in contact with the first sidewall (120), partitioning, in the second direction, one end portion in the first direction of the hollow space (S), and at least partially spaced apart from the second sidewall (130); or a second barrier (400b) extending toward the other side of the first direction to be in contact with the second sidewall (130), partitioning, in the second direction, the other end portion in the first direction of the hollow space (S), and at least partially spaced apart from the first sidewall (120),
the plurality of busbars (200) comprises one side busbar (200a) and other side busbar (200b), wherein the one side busbar (200a) and the other side busbar (200b) are installed: at one side and other side of the second direction of one side in the first direction of the first barrier (400a), respectively, adjacent to the first barrier (400a) with the first barrier (400a) therebetween while physically separated from each other; or at the one side and the other side of the second direction of other side in the first direction of the second barrier (400b), respectively, adjacent to the second barrier (400b) with the second barrier (400b) therebetween while physically separated from each other,
the plurality of battery cells (300) comprises one side battery cell (300a) and other side battery cell (300b), wherein the one side battery cell (300a) and the other side battery cell (300b) are disposed: at one side and other side in the second direction of the first barrier (400a), respectively, adjacent to the first barrier (400a); or at one side and other side in the second direction of the second barrier (400b), respectively, adjacent to the second barrier (400b),
a pair of electrodes (320) and (330) of the one side battery cell (300a) are in contact with: the one side busbar (200a); and one of the plurality of busbars (200) installed between the first barrier (400a) and the second sidewall (130) or installed between the second barrier (400b) and the first sidewall (120),
a pair of electrodes (320) and (330) of the other side battery cell (300b) are in contact with: the other side busbar (200b); and one of the plurality of busbars (200) installed between the first barrier (400a) and the second sidewall (130) or installed between the second barrier (400b) and the first sidewall (120), and
the one side battery cell (300a) and the other side battery cell (300b) are connected in series.

4. The battery module of claim 1, wherein a plurality of barriers (400) is provided,
the plurality of barriers (400) comprises: one or more first barriers (400a) extending to the one end portion in the first direction of the housing (100) to partition, in the second direction, the one end portion in the first direction of the hollow space (S); and one or more second barriers (400b) extending to the other end portion in the first direction of the housing (100) to partition the other end portion in the first direction of the hollow space (S) in the second direction,
the one or more first barriers (400a) and the one or more second barriers (400b) are alternately arranged along the second direction,
the busbar (200) installed at each of one side and other side of the second direction of one side in the first direction of the one or more first barriers (400a) is physically separated from each other with the one or more first barriers (400a) therebetween, and
the busbar (200) installed at each of one side and other side of the second direction of other side in the first direction of the one or more second barriers (400b) is physically separated from each other with the one or more second barriers (400b) therebetween.

5. The battery module of claim 1, wherein a plurality of barriers (400) is provided,
the plurality of barriers (400) comprises: one or more first barriers (400a) extending to the one end portion in the first direction of the housing (100) to partition, in the second direction, the one end portion in the first direction of the hollow space (S); and one or more second barriers (400b) extending to the other end portion in the first direction of the housing (100) to partition the other end portion in the first direction of the hollow space (S) in the second direction,
the one or more first barriers (400a) do not partition, in the second direction, the other end portion in the first direction of the hollow space (S),
the one or more second barriers (400b) do not partition, in the second direction, the one end portion in the first direction of the hollow space (S), and
the one or more first barriers (400a) and the one or more second barriers (400b) are alternately arranged along the second direction.

6. The battery module of claim 5, wherein at least a portion of the plurality of busbars (200) are installed at other side in the first direction of the one or more first barriers (400a) or at one side in the first direction of the one or more second barriers (400b).

7. The battery module of claim 1, wherein the housing (100) comprises a cover (160) covering an upper portion of the hollow space (S), wherein the cover (160) is provided with one or more exhaust holes (162) penetrating the cover (160) for exhausting flame, heat or gas generated from the battery cell (300) installed in the hollow space (S) to an outside of the housing (100).

8. The battery module of claim 7, wherein a plurality of barriers (400) is provided,
the plurality of barriers (400) comprises: one or more first barriers (400a) extending to the one end portion in the first direction of the housing (100) to partition, in the second direction, the one end portion in the first direction of the hollow space (S); and one or more second barriers (400b) extending to the other end portion in the first direction of the housing (100) to partition the other end portion in the first direction of the hollow space (S) in the second direction,
the one or more first barriers (400a) do not partition, in the second direction, the other end portion in the first direction of the hollow space (S),
the one or more second barriers (400b) do not partition, in the second direction, the one end portion in the first direction of the hollow space (S),
the one or more first barriers (400a) and the one or more second barriers (400b) are alternately arranged along the second direction, and
the one or more exhaust holes (162) are provided at an upper portion of other side of the first direction of the one or more first barriers (400a) or an upper portion of one side of the first direction of the one or more second barriers (400b).

9. A manufacturing method of a battery module of any one of claims 1 to 8, the manufacturing method comprising:
a housing manufacturing step (S510) of manufacturing a housing (100),
wherein at least a portion of the housing (100) and at least a portion of the one or more barriers (400) are integrally extruded in the housing manufacturing step (S510).

10. The manufacturing method of claim 9, wherein
the housing (100) comprises: a base (110) extending in first and second directions; a third sidewall (140) extending in an upward direction from one end portion in the second direction of the base (110); and a fourth sidewall (150) extending in the upward direction from other end portion of the base (110),
the at least a portion of the one or more barriers (400) are coupled to at least a portion of an upper surface of the base (110), and
at least a portion of the base (110), at least a portion of the third sidewall (140) and at least a portion of the fourth sidewall (150), and the at least a portion of the one or more barriers (400) are integrally extruded in the housing manufacturing step (S510).

## Patentansprüche

1. Batteriemodul, umfassend:
ein Gehäuse (100) mit einem Hohlraum (S) darin;
eine Vielzahl von Sammelschienen (200), die an einem Endabschnitt und einem anderen Endabschnitt in einer ersten Richtung des Hohlraums (S) installiert sind;
eine Vielzahl von Batteriezellen (300), die in dem Hohlraum (S) entlang einer zweiten Richtung angeordnet sind, die die erste Richtung und Aufwärts- und Abwärtsrichtungen schneidet, wobei jede der Vielzahl von Batteriezellen (300) umfasst: einen Körper (310), der an einem mittleren Abschnitt in der ersten Richtung des Hohlraums (S) angeordnet ist; und ein Paar von Elektroden (320) und (330), die mit der Vielzahl von Sammelschienen (200) in Kontakt stehen und aus dem Körper (310) in Richtung einer Seite und einer anderen Seite der ersten Richtung herausragen; und
eine oder mehrere Barrieren (400), die sich in der ersten Richtung und den Aufwärts- und Abwärtsrichtungen erstrecken, wobei jede der einen oder mehreren Barrieren (400) zwischen dem Körper (310) eines Paars von Batteriezellen (300) angeordnet ist, die in der zweiten Richtung einander benachbart sind, um in der zweiten Richtung den mittleren Abschnitt in der ersten Richtung des Hohlraums (S) zu unterteilen;
wobei das Batteriemodul **dadurch gekennzeichnet ist, dass**:
die eine oder mehreren Barrieren (400) sich zu einem Endabschnitt oder einem anderen Endabschnitt in der ersten Richtung des Gehäuses (100) erstrecken, um in der zweiten Richtung den einen Endabschnitt oder den anderen Endabschnitt in der ersten Richtung des Hohlraums (S) zu unterteilen, und
ein Paar der Vielzahl von Sammelschienen (200), die an einer Seite und einer anderen Seite in der zweiten Richtung von jeder der einen oder mehreren Barrieren (400) installiert sind, wobei die jeweilige der einen oder mehreren Barrieren (400) dazwischen liegt, durch die eine oder mehreren Barrieren (400) in der zweiten Richtung physisch getrennt sind.

2. Batteriemodul nach Anspruch 1, wobei das Gehäuse (100) umfasst:
eine Basis (110), die sich in der ersten Richtung und der zweiten Richtung erstreckt; und eine erste Seitenwand (120), die sich in der Aufwärtsrichtung von einem Endabschnitt in der ersten Richtung der Basis (110) erstreckt, oder eine zweite Seitenwand (130), die sich in der Aufwärtsrichtung von dem anderen Endabschnitt in der ersten Richtung der Basis (110) erstreckt, und
jede der einen oder mehreren Barrieren (400) sich zu der einen Seite oder der anderen Seite der ersten Richtung erstreckt, um mit der ersten Seitenwand (120) oder der zweiten Seitenwand (130) in Kontakt zu stehen, und in der zweiten Richtung den einen Endabschnitt oder den anderen Endabschnitt in der ersten Richtung des Hohlraums (S) unterteilt.

3. Batteriemodul nach Anspruch 2, wobei die eine oder mehreren Barrieren (400) umfassen:
eine erste Barriere (400a), die sich in Richtung der einen Seite der ersten Richtung erstreckt, um mit der ersten Seitenwand (120) in Kontakt zu stehen, wobei sie in der zweiten Richtung einen Endabschnitt in der ersten Richtung des Hohlraums (S) unterteilt und mindestens teilweise von der zweiten Seitenwand (130) beabstandet ist; oder eine zweite Barriere (400b), die sich in Richtung der anderen Seite der ersten Richtung erstreckt, um mit der zweiten Seitenwand (130) in Kontakt zu stehen, wobei sie in der zweiten Richtung den anderen Endabschnitt in der ersten Richtung des Hohlraums (S) unterteilt und mindestens teilweise von der ersten Seitenwand (120) beabstandet ist,
die Vielzahl von Sammelschienen (200) eine Sammelschiene der einen Seite (200a) und eine Sammelschiene der anderen Seite (200b) umfasst, wobei die Sammelschiene der einen Seite (200a) und die Sammelschiene der anderen Seite (200b) installiert sind: an einer Seite bzw. einer anderen Seite in der zweiten Richtung der einen Seite in der ersten Richtung der ersten Barriere (400a), benachbart zu der ersten Barriere (400a) mit der ersten Barriere (400a) dazwischen, während sie physisch voneinander getrennt sind; oder an der einen Seite bzw. der anderen Seite in der zweiten Richtung der anderen Seite in der ersten Richtung der zweiten Barriere (400b), benachbart zu der zweiten Barriere (400b) mit der zweiten Barriere (400b) dazwischen, während sie physisch voneinander getrennt sind,
die Vielzahl von Batteriezellen (300) eine Batteriezelle der einen Seite (300a) und eine Batteriezelle der anderen Seite (300b) umfasst, wobei die Batteriezelle der einen Seite (300a) und die Batteriezelle der anderen Seite (300b) angeordnet sind: an einer Seite bzw. einer anderen Seite in der zweiten Richtung der ersten Barriere (400a), benachbart zu der ersten Barriere (400a); oder an einer Seite bzw. einer anderen Seite in der zweiten Richtung der zweiten Barriere (400b), benachbart zu der zweiten Barriere (400b),
ein Paar von Elektroden (320) und (330) der Batteriezelle der einen Seite (300a) in Kontakt steht mit: der Sammelschiene der einen Seite (200a); und einer der Vielzahl von Sammelschienen (200), die zwischen der ersten Barriere (400a) und der zweiten Seitenwand (130) installiert ist oder zwischen der zweiten Barriere (400b) und der ersten Seitenwand (120) installiert ist,
ein Paar von Elektroden (320) and (330) der Batteriezelle der anderen Seite (300b) in Kontakt steht mit: der Sammelschiene der anderen Seite (200b); und einer der Vielzahl von Sammelschienen (200), die zwischen der ersten Barriere (400a) und der zweiten Seitenwand (130) installiert ist oder zwischen der zweiten Barriere (400b) und der ersten Seitenwand (120) installiert ist, und
die Batteriezelle der einen Seite (300a) und die Batteriezelle der anderen Seite (300b) in Reihe geschaltet sind.

4. Batteriemodul nach Anspruch 1, wobei eine Vielzahl von Barrieren (400) vorgesehen ist,
die Vielzahl von Barrieren (400) umfasst:
eine oder mehrere erste Barrieren (400a), die sich zu dem einen Endabschnitt in der ersten Richtung des Gehäuses (100) erstrecken, um in der zweiten Richtung den einen Endabschnitt in der ersten Richtung des Hohlraums (S) zu unterteilen; und eine oder mehrere zweite Barrieren (400b), die sich zu dem anderen Endabschnitt in der ersten Richtung des Gehäuses (100) erstrecken, um den anderen Endabschnitt in der ersten Richtung des Hohlraums (S) in der zweiten Richtung zu unterteilen,
die eine oder mehreren ersten Barrieren (400a) und die eine oder mehreren zweiten Barrieren (400b) abwechselnd entlang der zweiten Richtung angeordnet sind,
die an jeder von einer Seite und einer anderen Seite der zweiten Richtung einer Seite in der ersten Richtung der einen oder mehreren ersten Barrieren (400a) installierten Sammelschienen (200) mit der einen oder mehreren ersten Barrieren (400a) dazwischen physisch voneinander getrennt sind, und
die an jeder von einer Seite und einer anderen Seite der zweiten Richtung der anderen Seite in der ersten Richtung der einen oder mehreren zweiten Barrieren (400b) installierten Sammelschienen (200) mit der einen oder mehreren zweiten Barrieren (400b) dazwischen physisch voneinander getrennt sind.

5. Batteriemodul nach Anspruch 1, wobei eine Vielzahl von Barrieren (400) vorgesehen ist,
die Vielzahl von Barrieren (400) umfasst:
eine oder mehrere erste Barrieren (400a), die sich zu dem einen Endabschnitt in der ersten Richtung des Gehäuses (100) erstrecken, um in der zweiten Richtung den einen Endabschnitt in der ersten Richtung des Hohlraums (S) zu unterteilen; und eine oder mehrere zweite Barrieren (400b), die sich zu dem anderen Endabschnitt in der ersten Richtung des Gehäuses (100) erstrecken, um den anderen Endabschnitt in der ersten Richtung des Hohlraums (S) in der zweiten Richtung zu unterteilen,
die eine oder mehreren ersten Barrieren (400a) den anderen Endabschnitt in der ersten Richtung des Hohlraums (S) in der zweiten Richtung nicht unterteilen,
die eine oder mehreren zweiten Barrieren (400b) den einen Endabschnitt in der ersten Richtung des Hohlraums (S) in der zweiten Richtung nicht unterteilen, und
die eine oder mehreren ersten Barrieren (400a) und die eine oder mehreren zweiten Barrieren (400b) abwechselnd entlang der zweiten Richtung angeordnet sind.

6. Batteriemodul nach Anspruch 5, wobei mindestens ein Teil der Vielzahl von Sammelschienen (200) an der anderen Seite in der ersten Richtung der einen oder mehreren ersten Barrieren (400a) oder an einer Seite in der ersten Richtung der einen oder mehreren zweiten Barrieren (400b) installiert ist.

7. Batteriemodul nach Anspruch 1, wobei das Gehäuse (100) eine Abdeckung (160) umfasst, die einen oberen Abschnitt des Hohlraums (S) abdeckt, wobei die Abdeckung (160) mit einer oder mehreren Auslassöffnungen (162) versehen ist, die die Abdeckung (160) durchdringen, um Flammen, Hitze oder Gas, die von der in dem Hohlraum (S) installierten Batteriezelle (300) erzeugt werden, nach außen aus dem Gehäuse (100) abzuführen.

8. Batteriemodul nach Anspruch 7, wobei eine Vielzahl von Barrieren (400) vorgesehen ist,
die Vielzahl von Barrieren (400) umfasst:
eine oder mehrere erste Barrieren (400a), die sich zu dem einen Endabschnitt in der ersten Richtung des Gehäuses (100) erstrecken, um in der zweiten Richtung den einen Endabschnitt in der ersten Richtung des Hohlraums (S) zu unterteilen; und eine oder mehrere zweite Barrieren (400b), die sich zu dem anderen Endabschnitt in der ersten Richtung des Gehäuses (100) erstrecken, um den anderen Endabschnitt in der ersten Richtung des Hohlraums (S) in der zweiten Richtung zu unterteilen,
die eine oder mehreren ersten Barrieren (400a) den anderen Endabschnitt in der ersten Richtung des Hohlraums (S) in der zweiten Richtung nicht unterteilen,
die eine oder mehreren zweiten Barrieren (400b) den einen Endabschnitt in der ersten Richtung des Hohlraums (S) in der zweiten Richtung nicht unterteilen,
die eine oder mehreren ersten Barrieren (400a) und die eine oder mehreren zweiten Barrieren (400b) abwechselnd entlang der zweiten Richtung angeordnet sind, und
die eine oder mehreren Auslassöffnungen (162) an einem oberen Abschnitt der anderen Seite der ersten Richtung der einen oder mehreren ersten Barrieren (400a) oder an einem oberen Abschnitt der einen Seite der ersten Richtung der einen oder mehreren zweiten Barrieren (400b) vorgesehen sind.

9. Herstellungsverfahren für ein Batteriemodul nach einem der Ansprüche 1 bis 8, wobei das Herstellungsverfahren umfasst:
einen Gehäuseherstellungsschritt (S510) des Herstellens eines Gehäuses (100),
wobei mindestens ein Teil des Gehäuses (100) und mindestens ein Teil der einen oder mehreren Barrieren (400) in dem Gehäuseherstellungsschritt (S510) einstückig extrudiert werden.

10. Herstellungsverfahren nach Anspruch 9, wobei:
das Gehäuse (100) umfasst: eine Basis (110), die sich in erster und zweiter Richtung erstreckt ; eine dritte Seitenwand (140), die sich in einer Aufwärtsrichtung von einem Endabschnitt in der zweiten Richtung der Basis (110) erstreckt; und eine vierte Seitenwand (150), die sich in der Aufwärtsrichtung von dem anderen Endabschnitt der Basis (110) erstreckt,
der mindestens eine Teil der einen oder mehreren Barrieren (400) mit mindestens einem Teil einer Oberseite der Basis (110) gekoppelt ist, und
mindestens ein Teil der Basis (110), mindestens ein Teil der dritten Seitenwand (140) und mindestens ein Teil der vierten Seitenwand (150) sowie der mindestens eine Teil der einen oder mehreren Barrieren (400) in dem Gehäuseherstellungsschritt (S510) einstückig extrudiert werden.

## Revendications

1. Module de batterie comprenant :
un boîtier (100) renfermant un espace creux (S) ;
une pluralité de barres omnibus (200) installées au niveau d'une partie d'extrémité et d'une autre partie d'extrémité dans une première direction de l'espace creux (S) ;
une pluralité de cellules de batterie (300) disposées dans l'espace creux (S) le long d'une deuxième direction croisant la première direction et les directions vers le haut et vers le bas, dans lequel chacune de la pluralité de cellules de batterie (300) comprend : un corps (310) disposé au niveau d'une partie centrale dans la première direction de l'espace creux (S) ; et une paire d'électrodes (320) et (330) en contact avec la pluralité de barres omnibus (200) et faisant saillie depuis le corps (310) vers un côté et l'autre côté de la première direction ; et
une ou plusieurs barrières (400) s'étendant dans la première direction et les directions vers le haut et vers le bas, dans lequel chacune des une ou plusieurs barrières (400) est disposée entre le corps (310) d'une paire de cellules de batterie (300) adjacentes l'une à l'autre dans la deuxième direction pour diviser, dans la deuxième direction, la partie centrale dans la première direction de l'espace creux (S) ;
le module de batterie étant **caractérisé en ce que** :
lesdites une ou plusieurs barrières (400) s'étendent vers une partie d'extrémité ou une autre partie d'extrémité dans la première direction du boîtier (100) pour diviser, dans la deuxième direction, la une partie d'extrémité ou l'autre partie d'extrémité dans la première direction de l'espace creux (S), et
une paire de la pluralité de barres omnibus (200) installées au niveau d'un côté et de l'autre côté dans la deuxième direction de chacune des une ou plusieurs barrières (400), avec ladite chacune des une ou plusieurs barrières (400) entre elles, sont physiquement séparées dans la deuxième direction par les une ou plusieurs barrières (400).

2. Module de batterie selon la revendication 1, dans lequel le boîtier (100) comprend :
une base (110) s'étendant dans la première direction et la deuxième direction ; et une première paroi latérale (120) s'étendant dans la direction vers le haut depuis une partie d'extrémité dans la première direction de la base (110) ou une deuxième paroi latérale (130) s'étendant dans la direction vers le haut depuis l'autre partie d'extrémité dans la première direction de la base (110), et
chacune des une ou plusieurs barrières (400) s'étend vers le un côté ou l'autre côté de la première direction pour être en contact avec la première paroi latérale (120) ou la deuxième paroi latérale (130) et divise, dans la deuxième direction, la une partie d'extrémité ou l'autre partie d'extrémité dans la première direction de l'espace creux (S).

3. Module de batterie selon la revendication 2, dans lequel les une ou plusieurs barrières (400) comprennent :
une première barrière (400a) s'étendant vers le un côté de la première direction pour être en contact avec la première paroi latérale (120), divisant, dans la deuxième direction, une partie d'extrémité dans la première direction de l'espace creux (S), et étant au moins partiellement espacée de la deuxième paroi latérale (130) ; ou une deuxième barrière (400b) s'étendant vers l'autre côté de la première direction pour être en contact avec la deuxième paroi latérale (130), divisant, dans la deuxième direction, l'autre partie d'extrémité dans la première direction de l'espace creux (S), et étant au moins partiellement espacée de la première paroi latérale (120),
la pluralité de barres omnibus (200) comprend une barre omnibus d'un côté (200a) et une barre omnibus de l'autre côté (200b), dans lequel la barre omnibus d'un côté (200a) et la barre omnibus de l'autre côté (200b) sont installées : au niveau d'un côté et de l'autre côté de la deuxième direction d'un côté dans la première direction de la première barrière (400a), respectivement, adjacentes à la première barrière (400a) avec la première barrière (400a) entre elles tout en étant physiquement séparées l'une de l'autre ; ou au niveau de l'un côté et de l'autre côté de la deuxième direction de l'autre côté dans la première direction de la deuxième barrière (400b), respectivement, adjacentes à la deuxième barrière (400b) avec la deuxième barrière (400b) entre elles tout en étant physiquement séparées l'une de l'autre,
la pluralité de cellules de batterie (300) comprend une cellule de batterie d'un côté (300a) et une cellule de batterie de l'autre côté (300b), dans lequel la cellule de batterie d'un côté (300a) et la cellule de batterie de l'autre côté (300b) sont disposées : au niveau d'un côté et de l'autre côté dans la deuxième direction de la première barrière (400a), respectivement, adjacentes à la première barrière (400a) ; ou au niveau d'un côté et de l'autre côté dans la deuxième direction de la deuxième barrière (400b), respectivement, adjacentes à la deuxième barrière (400b),
une paire d'électrodes (320) et (330) de la cellule de batterie d'un côté (300a) est en contact avec : la barre omnibus d'un côté (200a) ; et l'une de la pluralité de barres omnibus (200) installée entre la première barrière (400a) et la deuxième paroi latérale (130) ou installée entre la deuxième barrière (400b) et la première paroi latérale (120),
une paire d'électrodes (320) et (330) de la cellule de batterie de l'autre côté (300b) est en contact avec : la barre omnibus de l'autre côté (200b) ; et l'une de la pluralité de barres omnibus (200) installée entre la première barrière (400a) and la deuxième paroi latérale (130) ou installée entre la deuxième barrière (400b) et la première paroi latérale (120), et
la cellule de batterie d'un côté (300a) et la cellule de batterie de l'autre côté (300b) sont connectées en série.

4. Module de batterie selon la revendication 1, dans lequel une pluralité de barrières (400) est prévue,
la pluralité de barrières (400) comprend :
une ou plusieurs premières barrières (400a) s'étendant vers la une partie d'extrémité dans la première direction du boîtier (100) pour diviser, dans la deuxième direction, la une partie d'extrémité dans la première direction de l'espace creux (S) ; et une ou plusieurs deuxièmes barrières (400b) s'étendant vers l'autre partie d'extrémité dans la première direction du boîtier (100) pour diviser l'autre partie d'extrémité dans la première direction de l'espace creux (S) dans la deuxième direction,
les une ou plusieurs premières barrières (400a) et les une ou plusieurs deuxièmes barrières (400b) sont disposées de manière alternée le long de la deuxième direction,
les barres omnibus (200) installées au niveau de chacun d'un côté et de l'autre côté de la deuxième direction d'un côté dans la première direction des une ou plusieurs premières barrières (400a) sont physiquement séparées l'une de l'autre avec les une ou plusieurs premières barrières (400a) entre elles, et
les barres omnibus (200) installées au niveau de chacun d'un côté et de l'autre côté de la deuxième direction de l'autre côté dans la première direction des une ou plusieurs deuxièmes barrières (400b) sont physiquement séparées l'une de l'autre avec les une ou plusieurs deuxièmes barrières (400b) entre elles.

5. Module de batterie selon la revendication 1, dans lequel une pluralité de barrières (400) est prévue,
la pluralité de barrières (400) comprend :
une ou plusieurs premières barrières (400a) s'étendant vers la une partie d'extrémité dans la première direction du boîtier (100) pour diviser, dans la deuxième direction, la une partie d'extrémité dans la première direction de l'espace creux (S) ; et une ou plusieurs deuxièmes barrières (400b) s'étendant vers l'autre partie d'extrémité dans la première direction du boîtier (100) pour diviser l'autre partie d'extrémité dans la première direction de l'espace creux (S) dans la deuxième direction,
les une ou plusieurs premières barrières (400a) ne divisent pas, dans la deuxième direction, l'autre partie d'extrémité dans la première direction de l'espace creux (S),
les une ou plusieurs deuxièmes barrières (400b) ne divisent pas, dans la deuxième direction, la une partie d'extrémité dans la première direction de l'espace creux (S), et
les une ou plusieurs premières barrières (400a) et les une ou plusieurs deuxièmes barrières (400b) sont disposées de manière alternée le long de la deuxième direction.

6. Module de batterie selon la revendication 5, dans lequel au moins une partie de la pluralité de barres omnibus (200) est installée au niveau de l'autre côté dans la première direction des une ou plusieurs premières barrières (400a) ou au niveau d'un côté dans la première direction des une ou plusieurs deuxièmes barrières (400b).

7. Module de batterie selon la revendication 1, dans lequel le boîtier (100) comprend un couvercle (160) recouvrant une partie supérieure de l'espace creux (S), dans lequel le couvercle (160) est pourvu d'un ou plusieurs trous d'échappement (162) traversant le couvercle (160) pour évacuer la flamme, la chaleur ou le gaz généré depuis la cellule de batterie (300) installée dans l'espace creux (S) vers un extérieur du boîtier (100).

8. Module de batterie selon la revendication 7, dans lequel une pluralité de barrières (400) est prévue,
la pluralité de barrières (400) comprend :
une ou plusieurs premières barrières (400a) s'étendant vers la une partie d'extrémité dans la première direction du boîtier (100) pour diviser, dans la deuxième direction, la une partie d'extrémité dans la première direction de l'espace creux (S) ; et une ou plusieurs deuxièmes barrières (400b) s'étendant vers l'autre partie d'extrémité dans la première direction du boîtier (100) pour diviser l'autre partie d'extrémité dans la première direction de l'espace creux (S) dans la deuxième direction,
les une ou plusieurs premières barrières (400a) ne divisent pas, dans la deuxième direction, l'autre partie d'extrémité dans la première direction de l'espace creux (S),
les une ou plusieurs deuxièmes barrières (400b) ne divisent pas, dans la deuxième direction, la une partie d'extrémité dans la première direction de l'espace creux (S),
les une ou plusieurs premières barrières (400a) et les une ou plusieurs deuxièmes barrières (400b) sont disposées de manière alternée le long de la deuxième direction, et
les un ou plusieurs trous d'échappement (162) sont prévus au niveau d'une partie supérieure de l'autre côté de la première direction des une ou plusieurs premières barrières (400a) ou d'une partie supérieure d'un côté de la première direction des une ou plusieurs deuxièmes barrières (400b).

9. Procédé de fabrication d'un module de batterie selon l'une quelconque des revendications 1 à 8, le procédé de fabrication comprenant :
une étape de fabrication de boîtier (S510) consistant à fabriquer un boîtier (100),
dans lequel au moins une partie du boîtier (100) et au moins une partie des une ou plusieurs barrières (400) sont extrudées d'un seul tenant lors de l'étape de fabrication de boîtier (S510).

10. Procédé de fabrication selon la revendication 9, dans lequel :
le boîtier (100) comprend : une base (110) s'étendant dans les première et deuxième directions ; une troisième paroi latérale (140) s'étendant dans une direction vers le haut depuis une partie d'extrémité dans la deuxième direction de la base (110) ; et une quatrième paroi latérale (150) s'étendant dans la direction vers le haut depuis l'autre partie d'extrémité de la base (110),
l'au moins une partie des une ou plusieurs barrières (400) est couplée à au moins une partie d'une surface supérieure de la base (110), et
au moins une partie de la base (110), au moins une partie de la troisième paroi latérale (140) et au moins une partie de la quatrième paroi latérale (150), et l'au moins une partie des une ou plusieurs barrières (400) sont extrudées d'un seul tenant lors de l'étape de fabrication de boîtier (S510).
